# EUROPÄISCHE PATENTANMELDUNG

(11) **EP 1 321 279 A1**
(43) Veröffentlichungstag der Anmeldung: **25.06.2003**
(21) Anmeldenummer: 01129978.1
(22) Anmeldetag: 17.12.2001
(51) Int. Cl.: B29C 47/10, B29C 47/76

(54) **Verfahren zur Extrusion sowie dadurch herstellbarer Formkörper**

(71) Anmelder: Lihotzky-Vaupel, Wolfram, 94557 Niederalteich (DE)
(72) Erfinder: Lihotzky-Vaupel, Wolfram, 94557 Niederalteich (DE)
(74) Vertreter: Wunderlich, Rainer, Dipl.-Ing.

(57) **Zusammenfassung**

Die Erfindung betrifft ein Verfahren zur Extrusion einer Materialmischung, welche aus einem natürlichen Polymer und mindestens einer weiteren Naturstoffkomponente besteht, wobei das natürliche Polymer und die mindestens eine weitere Naturstoffkomponente in einen Extruder eingeführt werden, diese vermischt, erhitzt und anschließend ausextrudiert werden. Erfindungsgemäß ist vorgesehen, dass in den Extruder zusätzlich ein Fluid in einem überkritischen Zustand eingeleitet und mit der Materialmischung vermengt wird. Weiter betrifft die Erfindung einen schwer entflammbaren Formkörper, welcher mit dem Verfahren herstellbar ist.

## Beschreibung

Die Erfindung betrifft ein Verfahren zur Extrusion einer Materialmischung, welche aus einem natürlichen Polymer und mindestens einer weiteren Naturstoffkomponente besteht, wobei das natürliche Polymer und die mindestens eine weitere Naturstoffkomponente in einen Extruder eingeführt werden, diese vermischt, erhitzt und anschließend ausextrudiert werden. Die Erfindung betrifft weiter einen Formkörper, welcher aus einer Materialmischung, welche aus einem natürlichen Polymer und mindestens einer weiteren Naturstoffkomponente besteht, hergestellt ist.

Derartige Verfahren zur Extrusion von Formkörpern, welche aus einem natürlichen Polymer und einem Füllstoff, beispielsweise Holzspäne oder einem anderen natürlichen Faserstoff, bestehen, sind hinlänglich bekannt. Gegenüber Polymeren auf Mineralölbasis weisen natürliche Polymere, welche aus pflanzlichen oder tierischen Ausgangsprodukten gewonnen sind, Nachteile hinsichtlich Ihrer Vernetzungsund Fließeigenschaften auf. So besitzten Formkörper, welche vollständig aus einem natürlichen Polymer geformt sind, wegen der begrenzten Vernetzungseigenschaften sowie der geringeren Bindungskräfte der einzelnen Moleküle des natürlichen Polymers eine geringere Festigkeit auf, so dass derartige Formkörper aus 100 % natürlichem Polymer für viele Anwendungen nicht einsetzbar sind.

Es ist bekannt, die Festigkeit von derartigen Formkörpern dadurch zu erhöhen, dass das natürliche Polymer mit Füllstoffen, wie Holzspäne etc. vermengt wird. Zwischen den Oberflächen der Füllstoffpartikel sowie den Polymermolekülen bilden sich relativ hohe Bindungskräfte aus, so dass zusammen mit der höheren Festigkeit der Füllstoffe eine deutlich verbesserte Festigkeit des daraus geformten Formkörpers erreicht wird. Aus diesem Grund nimmt bis zu einem gewissen Grad bei Abnahme des Anteiles des natürlichen Polymers und gleichzeitiger Zunahme des Anteiles an Füllstoff die Festigkeit eines Füllkörpers zu.

Andererseits ist es jedoch zum Zwecke der Extrusion notwendig, dass die Materialmischung aus dem aufgeschmolzenen natürlichen Polymer und den darin eingearbeiteten Füllstoffen hinreichend pastös, also nicht zu krümelig ist. Bei den bisher bekannten Verfahren zur Herstellung von Formkörpern aus einem natürlichen thermoplastischen Polymer war es daher erforderlich, den Anteil des schmelzflüssigen natürlichen Polymers in der Materialmischung zur Erreichung einer gewünschten pastösen Extrusionsmasse auf einen Wert festzusetzen, bei dem nicht die höchstmögliche Festigkeit des daraus hergestellten Formkörpers erreicht werden konnte.

Zur Verbesserung der pastösen Eigenschaft der Extrusionsmasse ohne Erhöhung des Anteiles des schmelzflüssigen Polymers ist es zwar denkbar, Wasser der Mischung beizumengen. Allerdings wird Wasser von den Faserstoffen sehr schnell aufgesogen und stellt ein Problem aufgrund einer allmählichen Entstehung von Wasserdampf dar. Dieses Ausdampfen des Wassers aus dem Fasermaterial beeinträchtigt die Festigkeit des Formkörpers in erheblichem Maße.

Der Erfindung liegt die **Aufgabe** zugrunde, einen Formkörper besonders einfach herzustellen, welcher zudem vielfältige Anwendungsmöglichkeiten bietet.

Die Aufgabe wird durch ein Verfahren mit den Merkmalen des Anspruchs 1 gelöst. Bevorzugte Ausführungsformen des Verfahrens sind in den abhängigen Ansprüchen angegeben.

Die Erfindung ist dadurch gekennzeichnet, dass in einem Bereich des Extruders zusätzlich ein Fluid in einem überkritischen Zustand eingeleitet und mit dem natürlichen Polymer und der mindestens einen Naturstoffkomponente vermischt wird und dass zumindest in dem Bereich des Extruders, in welchem das überkritische Fluid eingeleitet wird, Druck und Temperatur derart eingestellt werden, dass das überkritische Fluid in seinem flüssigen Zustand verbleibt.

Mit dem erfindungsgemäßen Verfahren kann eine Materialmischung hervorragend extrudiert werden, selbst wenn diese einen hohen Anteil an Natur- oder Faserstoff und einen geringen Anteil an einem natürlichen Polymer, auch Biopolymer genannt, enthält. Mit dem Verfahren können so Formkörper aus nachwachsenden Rohstoffen extrudiert werden, welche eine besonders hohe Festigkeit aufweisen.

Eine Ursache hierfür kann darin gesehen werden, dass trotz eines für eine hohe Festigkeit notwendigen geringen Anteiles des aufgeschmolzenen Polymers durch die Zugabe des Fluides in dem überkritischen, flüssigen Zustand in dem Extruder eine ausreichend pastöse, homogene Masse eingestellt werden kann, welche zur Extrusion hervorragend geeignet ist. Zudem wird das überkritische Fluid nicht in dem Maße wie Wasser von den Natur- oder Faserstoffen aufgesogen.
Da weiter das überkritische Fluid bei einer definierten Herabsetzung des Druckes sehr schnell in den gasförmigen Zustand übergeht, wird das Problem einer allmählich ausdampfenden Flüssigkeit verhindert.

Überraschenderweise hat sich auch ergeben, dass mit dem erfindungsgemäßen Verfahren auch Materialmischungen mit relativ feuchten Natur- oder Faserstoffen mit einem Feuchtigkeitsgrad von bis zu 25 % verarbeitet werden können. Denn beim Übertritt des überkritischen, flüssigen Fluides in seine gasförmige Phase wird auch ein erheblicher Teil der Feuchtigkeit in den Faserstoffen mitverdampft, so dass eine zusätzliche Trocknungswirkung entsteht.

Insgesamt ergibt sich so ein sehr einfach und effizient durchzuführendes Extrusionsverfahren, mit welchem Formkörper mit einer hohen Festigkeit hergestellt werden können.

Nach einer Weiterbildung der Erfindung ist es bevorzugt, dass in einem Bereich vor einem Ausgang des Extruders das überkritische Fluid als Gas abgeführt wird. Hierfür kann eine spezielle Entgasungsstation mit einem Lüfter oder einer Vakuumpumpe vorgesehen sein. Durch Abführung des überkritischen Fluides vor dem Extrudieren durch ein Formwerkzeug kann eine homogene, nahezu porenfreie Masse hergestellt werden, mit der Formkörper mit einer hohen Dichte gefertigt werden können.

Alternativ ist es möglich, dass Druck und Temperatur der Materialmischung vor einem Austritt aus dem Extruder derart eingestellt werden, dass das überkritische Fluid bei Austritt aus dem Extruder unter Umgebungsbedingungen schlagartig von einem flüssigen Zustand in einen gasförmigen umgesetzt und dabei die Mischung definiert gekühlt und/oder getrocknet wird und dass durch die Kühlung und/oder Trocknung die extrudierte Mischung verfestigt und ein definierter Festigkeitszustand eingestellt wird. Auf diese Weise kann auch ein Formkörper mit einer definierten Porenstruktur gefertigt werden. Das Formwerkzeug kann dabei in Extrusionsrichtung eine definierte axiale Länge aufweisen, wobei sich die Öffnungen des Formwerkzeuges in axialer Richtung konisch oder stufenweise erweitern. Auf diese Weise kann ein definierter Schäumungsvorgang erreicht werden, wobei Formkörper mit bestimmter Kontur geformt werden. Formkörper mit Porenstruktur sind insbesondere für den Leichtbau oder als Dämmstoffe von besonderem Interesse.

Zur Durchführung des Verfahrens kann jedes geeignete Fluid verwendet werden, welches mit wirtschaftlichem Aufwand in einen überkritischen Zustand bringbar ist. Besonders kostengünstig und zweckmäßig ist es, dass als überkritisches Fluid CO₂ eingesetzt wird. Bei CO₂ liegt der sogenannte kritische Punkt, bei welchem die Flüssigkeit physikalische Eigenschaften eines Gases annimmt, bei etwa 30 °C und 72 bar.

Hochfeste Formkörper können erfindungsgemäß dadurch hergestellt werden, dass ein thermisch aushärtbarer Binder in den Extruder eingeleitet und in die Materialmischung eingearbeitet wird und dass nach dem Extrudieren eines Formkörpers dieser durch Erhitzen auf die Aushärttemperatur des Binders gehärtet wird. Als Binder kann beispielsweise Wasserglas oder eine andere Verbindung auf Wasserglasbasis verwendet werden, wobei das Erhitzen insbesondere durch Infrarot- oder Mikrowellenbestrahlung nach dem Austritt aus dem Extruder erreicht werden kann. Der aushärtbare Binder ist dabei so eingestellt, dass die Aushärttemperatur innerhalb des Extruders nicht erreicht wird, sondern erst nach Austritt aus dem Extruder durch eine spezielle Heizeinrichtung. Auf diese Weise können Formkörper gefertigt werden, welche gegenüber herkömmlich hergestellten Formkörpern eine bis zu zehnfach höhere Festigkeit aufweisen. Der thermisch aushärtbare Binder wird vornehmlich in Verbindung mit dem überkritischen Fluid eingesetzt, kann jedoch auch alleine, ohne überkritische Fluide mit einem natürlichen Polymer in einem Extruder verarbeitet werden.

Grundsätzlich kann ein Ein-, Doppel- oder Mehrwellenextruder eingesetzt werden. Der Doppelwellenextruder kann ein Gleichläufer sein. Besonders bevorzugt ist es jedoch, dass als Extruder ein Doppelwellenextruder mit gegenläufig angetriebenen Extruderwellen verwendet wird. Ein derartiger Extruder sorgt nicht nur für eine besonders gute Durchmischung der einzelnen Komponenten, sondern insbesondere auch für einen gleichmäßigen Materialfluss am Ausgang des Extruders. Dies ist für eine besonders gute Verdichtung des Extrusionsstranges und damit auch für ein gleichmäßiges Extrusionsergebnis wesentlich.

Eine weitere bevorzugte Ausführungsform der Erfindung besteht darin, dass ein Schutzgas in den Extruder eingeleitet wird. Der Extruder stellt einen weitgehend abgeschlossenen Verfahrensraum dar, in welchem eine spezielle Schutzgasatmosphäre eingestellt werden kann. Durch ein inertes Schutzgas, beispielsweise N₂, NO₂, Helium, Argon etc., können unerwünschte Reaktionen der erhitzten Materialmischung mit Sauerstoff weitgehend unterbunden werden. Derartige Oxidationen des natürlichen Polymers können deren Vernetzungs- und Bindungseigenschaften beeinträchtigen.

Gemäß der Erfindung kann das inerte Schutzgas auch als das zuvor beschriebene überkritische Fluid eingeleitet werden.

Zur Herstellung besonders robuster und zugleich wirtschaftlicher Formkörper ist es erfindungsgemäß, dass als weitere Naturstoffkomponente ein Faserstoff verwendet wird. Der Naturstoff kann sowohl pflanzlicher und/oder tierischer Herkunft sein. Besonders bevorzugt sind Holz in Form von Sägemehl und/oder Holzspänen, Faserholz wie Palmenstämme geschreddert und getrocknet, Spanplatten geschreddert bzw. recycelt, Stroh von diversen Getreidearten, Schilf, Bagasse aus der Zuckerrohrgewinnung, Körnerspelze wie Reisspelze, Dinkelspelze bzw. Schalen von Naturfasern aller Art wie Kokos, Hanf, Flachs usw., Ölsaattrester, Olivenöltrester sowie Fruchttrester in getrocknetem oder ungetrocknetem Zustand. Als Naturstoffe tierischer Herkunft können Haare oder Hornspäne verwendet werden. Die Rohstoffe sind vorzugsweise in getrockneter Form zu verarbeiten, können aber auch durch besondere Maßnahmen, beispielsweise durch mehrmalige Entgasungen, bis ca. 25 % Restfeuchte verarbeitet werden. Die Naturfasern können in verschiedenen und/oder definierten Längen als zusätzliche Armierung bzw. zur Erhöhung der Biege- und Zugfestigkeit zugesetzt werden.

Als thermoplastische natürliche Polymere können alle geeigneten und bekannten Polymere pflanzlicher oder tierischer Herkunft verwendet werden, welche gute Bindungseigenschaften aufweisen. Insbesondere sind Getreidemehle, Stärke, Gelatine, Lignine, Naturwachse etc. sowie deren Kombinationen geeignet. Je nach gewünschter Eigenschaft des Extrudates kann der Anteil der natürlichen Polymere an der Materialmischung zwischen 10 und 80 % liegen. Als weitere Komponenten für die Materialmischung können Füllmaterialien, Gleitmittel, Plastifizierungsmittel, Farbpigmente sowie weitere Additive zur Herstellung gewünschter Materialeigenschaften vorgesehen werden.

Weiter ist es erfindungsgemäß, dass der Faserstoff mit einem flüssigen Additiv getränkt und/oder benetzt wird. Hierdurch wird die einzelne Faser der Naturstoffkomponente sozusagen versiegelt oder imprägniert. Als Additiv können beispielsweise Naturwachse oder Öle dienen, welche eine Faser umhüllen und/oder in diese aufgesaugt werden. Hierdurch wird die Faser in besonderer Weise geschützt. Beispielsweise beim Ablängen von Extrusionssträngen kann auf diese Weise verhindert werden, dass an den Schnittbereichen größere Flächen der Faser freiliegen, durch welche unerwünschte Feuchtigkeit in den Formkörper aufgenommen werden würde. Auf diese Weise kann ein vorzeitig einsetzender Schimmel- oder Verrottungsprozess verhindert werden.

Alternativ oder ergänzend kann das Additiv ein Mittel mit einer pilz-, bakterien- oder schädlingsabweisenden Wirkung sein. Hierfür eignen sich insbesondere natürliche ätherische Öle mit einer gewünschten resistenten oder schädlingsabweisenden Wirkung.

Das Additiv kann der Naturstoffkomponente grundsätzlich vor der Einleitung in den Extruder zugeführt werden, beispielsweise können die Faserstoffe mit dem Additiv besprüht oder in einem Behälter mit dem Additiv getränkt werden. Erfindungsgemäß kann das Additiv in einem flüssigen Zustand in den Extruder eingedüst werden.

Alternativ ist es auch möglich, dass das Additiv in einem pulverförmigen Zustand in den Extruder eingeleitet wird, wobei das Additiv eine Schmelztemperatur aufweist, welche geringer als die Schmelztemperatur des natürlichen Polymers ist. Das Additiv schmilzt somit vor dem Aufschmelzen des thermoplastischen natürlichen Polymers, so dass das aufgeschmolzene Additiv die Faserstoffe besonders gut benetzen oder in diese aufgenommen werden kann. Mit der Einführung des Additivs in den Extruder kann der gesamte Herstellungsprozess mit einem einzigen Extruder durchgeführt werden.

Nach der Erfindung ist es weiter vorteilhaft, dass als Faserstoff Zellstofffasern, vorzugsweise aus recyceltem Papier, verwendet werden. Der Faserstoff kann als geschäumter Faserbrei eingeleitet werden. Die Papierfasern werden durch Zusetzen von Stärke oder mittels geeigneter Additive und Treibmittel zu Papierschaum im Extruder aufgeschäumt oder mit Polymeren aus Naturstoffen zu einem besonders festen und gleichzeitig leichten Schaumformkörper extrudiert.

In einer weiteren Ausführungsform der Erfindung ist es vorgesehen, dass als eine weitere Komponente ein mineralisches Material eingeleitet wird, welches schwer entflammbar ist. Das mineralische Material kann in pulverförmiger Form oder auch als Flüssigkeit in den Extruder eingeführt werden. In flüssiger Form kann das mineralische Material, welches beispielsweise eine Kieselsäure oder ein Kieselsol ist, als Naturstoffkomponente dienen. Auf diese Weise werden die relativ leicht entflammbaren Fasern brandgeschützt. Ergänzend oder alternativ kann ein mineralisches Pulver in die Materialmischung eingearbeitet werden, welches ebenfalls den Flammpunkt des Formkörpers in einem gewünschten Maß erhöht. Als mineralisches Material in pulverförmiger Form können verschiedene Gesteinsmehle, Gesteinsfasern wie Asbest oder Keramikmehle verwendet werden.

Auf diese Weise ist es möglich, mit einem natürlichen Material, welches zu 100 % aus natürlichen, also nicht synthetisch gewonnenen Rohstoffen besteht, selbst Dämmplatten und andere Baumaterialien herzustellen, welche hohe Brandschutzerfordernisse erfüllen. Mit dem erfindungsgemäßen Verfahren ist es möglich, Formkörper herzustellen, welche die Anforderungen der deutschen Brandschutzklasse A2 erfüllen.

Die eingangs genannte Aufgabe wird auch durch einen Formkörper gelöst, welcher dadurch gekennzeichnet ist, dass der Formkörper als eine weitere Komponente ein mineralisches Material aufweist, welches schwer entflammbar ist. Insbesondere in Kombination mit dem überkritischen Fluid, welches zur Erzeugung einer Porenstruktur gemäß dem zuvor beschriebenen Verfahren eingesetzt wird, können Dämmplatten mit hohen thermischen und schalldämpfenden Eigenschaften bei gleichzeitig hoher Brandschutzsicherheit hergestellt werden. Derartige Dämmplatten konnten bisher aus natürlichen, biologisch wieder abbaubaren Naurstoffen nicht in zufriedenstellender Weise hergestellt werden.

## Patentansprüche

1. Verfahren zur Extrusion einer Materialmischung, welche aus einem natürlichen Polymer und mindestens einer weiteren Naturstoffkomponente besteht, wobei
- das natürliche Polymer und die mindestens eine weitere Naturstoffkomponente in einen Extruder eingeführt werden,
- diese vermischt, erhitzt und anschließend ausextrudiert werden,
**dadurch gekennzeichnet,**
- **dass** in einen Bereich des Extruders zusätzlich ein Fluid in einem überkritischen Zustand eingeleitet und mit dem natürlichen Polymer und der mindestens einen weiteren Naturstoffkomponente vermischt werden und
- **dass** zumindest in dem Bereich des Extruders, in welchen das überkritische Fluid eingeleitet wird, Druck und Temperatur derart eingestellt werden, dass das überkritische Fluid in seinem flüssigen Zustand verbleibt.

2. Verfahren nach Anspruch 1,
**dadurch gekennzeichnet,**
**dass** in einem Bereich vor einem Ausgang des Extruders das überkritische Fluid als Gas abgeführt wird.

3. Verfahren nach Anspruch 1,
**dadurch gekennzeichnet,**
**dass** Druck und Temperatur der Materialmischung vor einem Austritt aus dem Extruder derart eingestellt werden, dass das überkritische Fluid bei Austritt aus dem Extruder unter Umgebungsbedingungen schlagartig von einem flüssigen Zustand in einen gasförmigen umgesetzt und dabei die Mischung definiert gekühlt und/oder getrocknet wird und
**dass** durch die Kühlung und/oder Trocknung die extrudierte Mischung verfestigt und ein definierter Festigkeitszustand eingestellt wird.

4. Verfahren nach einem der Ansprüche 1 bis 3,
**dadurch gekennzeichnet,**
**dass** als überkritisches Fluid CO₂ eingesetzt wird.

5. Verfahren nach einem der Ansprüche 1 bis 4,
**dadurch gekennzeichnet,**
**dass** ein thermisch aushärtbarer Binder in den Extruder eingeleitet und in die Materialmischung eingearbeitet wird und
**dass** nach dem Extrudieren eines Formkörpers dieser durch Erhitzen auf die Aushärttemperatur des Binders gehärtet wird.

6. Verfahren nach einem der Ansprüche 1 bis 5,
**dadurch gekennzeichnet,**
**dass** als Extruder ein Doppelwellenextruder mit gegenläufig angetriebenen Extruderwellen verwendet wird.

7. Verfahren nach einem der Ansprüche 1 bis 6,
**dadurch gekennzeichnet,**
**dass** ein Schutzgas in den Extruder eingeleitet wird.

8. Verfahren nach einem der Ansprüche 1 bis 7,
**dadurch gekennzeichnet,**
**dass** als weitere Naturstoffkomponente ein Faserstoff verwendet wird.

9. Verfahren nach Anspruch 8,
**dadurch gekennzeichnet,**
**dass** der Faserstoff mit einem flüssigen Additiv getränkt und/oder benetzt wird.

10. Verfahren nach Anspruch 9,
**dadurch gekennzeichnet,**
**dass** das Additiv in einem flüssigen Zustand in den Extruder eingedüst wird.

11. Verfahren nach einem der Ansprüche 1 bis 10,
**dadurch gekennzeichnet,**
**dass** als eine weitere Komponente ein mineralisches Material vorgesehen wird, welches schwer entflammbar ist.

12. Verfahren nach einem der Ansprüche 8 bis 11,
**dadurch gekennzeichnet,**
**dass** als Faserstoff Zellstofffasern, vorzugsweise aus recyceltem Papier, verwendet werden, welche insbesondere als geschäumter Faserbrei eingeleitet werden.

13. Formkörper, welcher aus einer Materialmischung, welche aus einem natürlichen Polymer und mindestens einer weiteren Naturstoffkomponente besteht, insbesondere nach einem der Verfahren nach einem der Ansprüche 1 bis 12 hergestellt ist,
**dadurch gekennzeichnet,**
**dass** der Formkörper als eine weitere Komponente ein mineralisches Material aufweist, welches schwer entflammbar ist.
